# EUROPEAN PATENT SPECIFICATION

(11) **EP 3 121 711 B1**
(45) Date of publication and mention of the grant of the patent: **20.10.2021**
(21) Application number: 14886222.0
(22) Date of filing: 20.03.2014
(51) Int. Cl.: G06F 8/20, G06F 8/34, G06Q 10/06

(54) **ACTION DESIGNING DEVICE AND ACTION DESIGNING PROGRAM**
AKTIONSDESIGNVORRICHTUNG UND AKTIONSDESIGNPROGRAMM
DISPOSITIF DE CONCEPTION D'ACTION ET PROGRAMME DE CONCEPTION D'ACTION

(43) Date of publication of application: 25.01.2017
(73) Proprietor: Mitsubishi Electric Corporation, Chiyoda-ku Tokyo 100-8310 (JP)
(72) Inventor: TAGUCHI, Shinya, Tokyo 100-8310 (JP)
(74) Representative: Pfenning, Meinig & Partner mbB
(86) International application number: PCT/JP2014/057656
(87) International publication number: WO 2015/140975

(56) References cited:
- WO-A1-2008/075087
- WO-A2-2007/136684
- JP-A- H1 124 813
- JP-A- 2002 297 380
- JP-A- 2007 087 127
- JP-A- 2009 251 927
- JP-A- 2010 157 103
- JP-A- 2011 159 202
- US-A1- 2013 097 244
- US-B1- 6 453 356
- None

## Description

### Technical Field

The present invention relates to a technology that designs a coordinated action among a plurality of devices by using various input tools.

### Background Art

Various user interface devices (hereinafter referred to as UI devices) are in practical use including a touch panel, voice recognition, space gesture recognition, and the like. In a vehicle navigation system or the like, there is developed a multimodal interface that utilizes these plurality of UI devices in combination.

There is proposed a mechanism of the multimodal interface that efficiently utilizes the plurality of UI devices.

Patent Literature 1 discloses a scheme that integrates different types of inputs such as a gesture input and a voice recognition input with abstract semantics.

MMI (Multimodal Interaction) Authoring of W3C is working to standardize a multimodal architecture on the Internet.

Non Patent Literature 1 discloses a method of describing an action of the multimodal interface in an SCXML (State Chart Extensible Markup Language). Moreover, Non Patent Literature 2 discloses a use of the SCXML as a format of a file in which the action of an integrated interface is described.

WO 2008/075087 A1 provides a method of automatically translating
modeling language code to hardware language code and a translator. The modeling language code is parsed to extract values associated with predetermined ones of a plurality of constructs to generate parsed modeling language code; and a transformation block is applied to the parsed modeling language code. The transformation block is adapted to convert the parsed modeling language code into hardware language code.

WO 2007/136684 A2 provides methods, mediums and systems to enable a user to program the behaviors of a Unified Modeling Language (UML) model in a graphical programming or modeling environment, such as a block diagram programming environment. The UML model is exported into a text-based format, which is subsequently imported into the graphical programming or modeling environment. The graphical programming or modeling environment represents the UML model using functional blocks so that the user can program the behaviors of the UML model. The graphical programming or modeling environment also enables the user to simulate or execute the UML model to determine the behaviors of the UML model.

US 6 453 356 B1 describes a system and method for exchanging data between two or more applications that includes a data exchange engine and a number of adapters associated with a corresponding number of applications.

### Citation List

### Patent Literature

Patent Literature 1: JP 9-114634 A

### Non Patent Literature

Non Patent Literature 1: W3C MMI Framework, http://www.w3.org/TR/mmi-framework/
Non Patent Literature 2: W3C State Chart XML, http://www.w3.org/TR/scxml/

### Summary of Invention

### Technical Problem

Designing of an application using the multimodal interface is complicated. Software design tools of various formats including a UML (Unified Modeling Language) design tool, a tabular design tool and a block format design tool are thus developed as tools to design the application. However, there is a problem that input/output information of the software design tools has no compatibility with one another.

The tabular design tool using a widespread tabular software has a merit that it is easy for a beginner to use but has a demerit that it is difficult to perform detailed designing with the tool, for example. On the other hand, the UML design tool enables detailed designing but requires a specialized skill to use the tool, and thus has a demerit that it is hard for a beginner to use.

Moreover, the input/output information of the software design tools has no compatibility with one another so that it is difficult to perform an operation such as modifying information designed with one software design tool by another software design tool later on.

An object of the present invention is to enable efficient development by allowing the input/output information of different types of software design tools to have compatibility with one another.

### Solution to Problem

The present invention is as defined in the appended independent claims. An action design apparatus according to the present invention includes:
a plurality of design units to generate design information in which a coordinated action among a plurality of devices is specified according to a user operation, each of the plurality of design units generating the design information in a different format;
a design information conversion unit provided corresponding to each of the plurality of design units to convert the design information generated by the corresponding design unit into common design information described by using vocabulary stored in a dictionary unit as well as convert common design information generated from the design information generated by another design unit into design information in a format generated by the corresponding design unit;
an output information conversion unit to convert output information output according to an action of each of the plurality of devices, into common output information described according to a common format provided for communication by using the vocabulary stored in the dictionary unit;
an action definition generation unit to generate action definition information that specifies an action timing and action details of the plurality of devices in the coordinated action based on the common design information; and
an action execution unit to act each device in a coordinated manner according to the common design information converted by the design information conversion unit as well as act each design unit according to the action definition information generated by the action definition generation unit and the common output information converted by the output information conversion unit.

### Advantageous Effects of Invention

The action design apparatus according to the present invention converts the design information having a different format for each design unit into the common design information described with the vocabulary stored in the dictionary unit as well as converts the converted common design information into the design information having a format corresponding to each design unit. This allows the design information generated by one design unit to be edited by another design unit. The development can be carried out efficiently as a result.

### Brief Description of Drawings

Fig. 1 is a block diagram of an action design apparatus 100 according to a first embodiment.
Fig. 2 is a diagram illustrating a processing flow of the action design apparatus 100 according to the first embodiment.
Fig. 3 is a diagram illustrating an event table 111 stored in a dictionary unit 110.
Fig. 4 is a diagram illustrating a design tool predicate table 112 stored in the dictionary unit 110.
Fig. 5 is a diagram illustrating a design tool proper noun table 113 stored in the dictionary unit 110.
Fig. 6 is a diagram illustrating a system proper noun table 114 stored in the dictionary unit 110.
Fig. 7 is a diagram illustrating a device proper noun table 115 stored in the dictionary unit 110.
Fig. 8 is a diagram illustrating an example of a screen in which a numeric value is input into a text box 201.
Fig. 9 is a diagram illustrating a coordinated action designed by a UML design tool 121B.
Fig. 10 is a diagram illustrating a coordinated action designed by a sequence diagram design tool 121C.
Fig. 11 is a diagram illustrating a coordinated action designed by a graph design tool 121D.
Fig. 12 is a diagram illustrating a coordinated action designed by a GUI design tool 121E.
Fig. 13 is a diagram illustrating a state table.
Fig. 14 is a diagram illustrating a state transition table.
Fig. 15 is a diagram illustrating an activity table.
Fig. 16 is a diagram illustrating the activity table.
Fig. 17 is a diagram to describe common design information.
Fig. 18 is a diagram illustrating action definition information described in SCXML.
Fig. 19 is a diagram illustrating common design information generated by converting design information that is generated as an input/output definition of a GUI device 151E.
Fig. 20 is a diagram illustrating common design information generated by converting design information that is generated as an input/output definition of a voice recognition device 151A and a voice synthesis device 151B.
Fig. 21 is a diagram illustrating common design information generated by converting design information that is generated as an input/output definition of the voice recognition device 151A and the voice synthesis device 151B.
Fig. 22 is a block diagram of an action design apparatus 100 according to a second embodiment.
Fig. 23 is a diagram illustrating a processing flow of the action design apparatus 100 according to the second embodiment.
Fig. 24 is a block diagram of an action design apparatus 100 according to a third embodiment.
Fig. 25 a diagram illustrating a design operation predicate table 116 stored in a dictionary unit 110.
Fig. 26 is a diagram to describe a first example and a second example.
Fig. 27 is a diagram illustrating a data structure of common design information.
Fig. 28 is a diagram illustrating an example of a hardware configuration of the action design apparatus 100 according to the first and second embodiments.

### Description of Embodiments

### First Embodiment

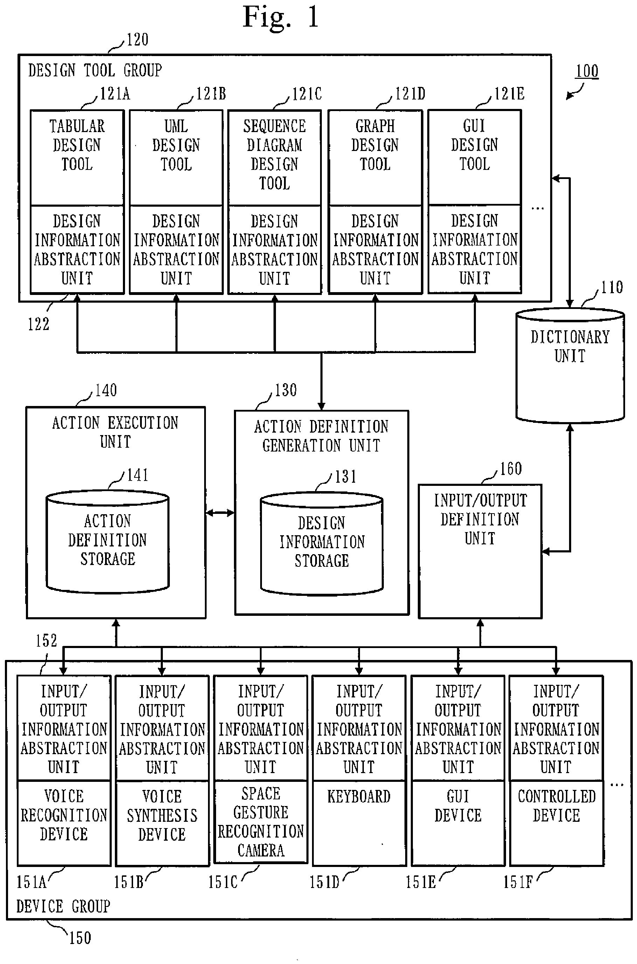

Fig. 1 is a block diagram of an action design apparatus 100 according to a first embodiment.

The action design apparatus 100 includes a dictionary unit 110, a design tool group 120, an action definition generation unit 130, an action execution unit 140, a device group 150, and an input/output defining unit 160.

The dictionary unit 110 stores vocabulary used to convert information transmitted/received among units into a common format.

The design tool group 120 is a set of a plurality of design tools 121 (design units) that designs a coordinated action among devices 151. The design tool group 120 includes, for example, a plurality of design tools such as a tabular design tool 121A, a UML design tool 121B, a sequence diagram design tool 121C, a graph design tool 121D, a GUI design tool 121E, and the like, each of which designs the coordinated action among the devices 151 in a different format.

According to an operation by a user, the design tool 121 generates design information in which the coordinated action among the devices 151 is specified. The design information generated by each design tool 121 has a different format.

A design information abstraction unit 122 (design information conversion unit) is provided corresponding to each design tool 121.

The design information abstraction unit 122 converts the design information received in the corresponding design tool 121 into common design information by expressing it semantically. Specifically, the design information abstraction unit 122 converts the design information into the common design information by using the vocabulary stored in the dictionary unit 110 to describe the design information according to a common format provided for action description. The design information abstraction unit 122 transmits the generated common design information to the action definition generation unit 130 so that the common design information is stored in a design information storage 131.

Moreover, the design information abstraction unit 122 reads the common design information stored in the design information storage 131 and converts the common design information being read into design information having a format corresponding to the corresponding design tool.

The action definition generation unit 130 stores the common design information transmitted from the design information abstraction unit 122 into the design information storage 131. On the basis of the common design information stored in the design information storage 131, the action definition generation unit 130 generates action definition information in which an action timing and action details of the device 151 in the coordinated action are specified. The action definition generation unit 130 transmits the generated action definition information to the action execution unit 140.

Note that the action definition information is a file defined in a state chart, for example. The action definition information may be a file pursuant to an SCXML format that W3C is working to standardize, or a file having a unique format obtained by extending the format.

The action execution unit 140 stores the action definition information transmitted from the action definition generation unit 130 into an action definition storage 141. On the basis of the action definition information stored in the action definition storage 141, the action execution unit 140 transmits instruction information to the device 151 and causes the device 151 to act, the instruction information being described according to a common format provided for communication by using the vocabulary stored in the dictionary unit 110.

The device group 150 is a set of the devices 151 including a UI device serving as an interface with a user and a control device to be controlled. The device group 150 includes, for example, a voice recognition device 151A, a voice synthesis device 151B, a space gesture recognition camera 151C, a keyboard 151D, and a GUI (Graphical User Interface) device 151E, all being the UI devices, and a controlled device 151F (such as a television, an air conditioner, a machine tool, a monitoring control apparatus, and a robot) being the control device.

The device 151 acts in response to at least either a user operation or the instruction information transmitted from the action execution unit 140.

An Input/output information abstraction unit 152 (output information conversion unit) is provided corresponding to each device 151.

The input/output information abstraction unit 152 converts the instruction information transmitted from the action execution unit 140 into a specific command of the device 151. When the instruction information is transmitted from the action execution unit 140, the device 151 acts on the basis of the specific command converted by the input/output information abstraction unit 152.

The device 151 outputs output information according to an action. The input/output information abstraction unit 152 converts the output information output by the device 151 into common output information that is described according to the common format provided for communication by using the vocabulary stored in the dictionary unit 110. The input/output information abstraction unit 152 transmits the generated common output information to the action execution unit 140.

The action execution unit 140 transmits the instruction information to the device 151 according to the common output information transmitted from the input/output information abstraction unit 152 as well as the action definition information, and causes the device 151 to act. Here, the device 151 to which the instruction information is transmitted may be identical to or different from the device 151 outputting the output information on which the common output information is based. The action definition information specifies to which device 151 the instruction information is transmitted.

The input/output defining unit 160 is a tool that defines input/output of the device 151. The input/output defining unit 160 is a text editor or a tabular tool, for example. According to a user operation, the input/output defining unit 160 generates definition information in which the input/output of the device 151 is defined and sets the information to the device 151.

Note that the design tool 121 acts and generates the design information when a user operates the device 151 in a design mode to be described. Likewise, the input/output defining unit 160 acts and generates the definition information when a user operates the device 151 in the design mode to be described.

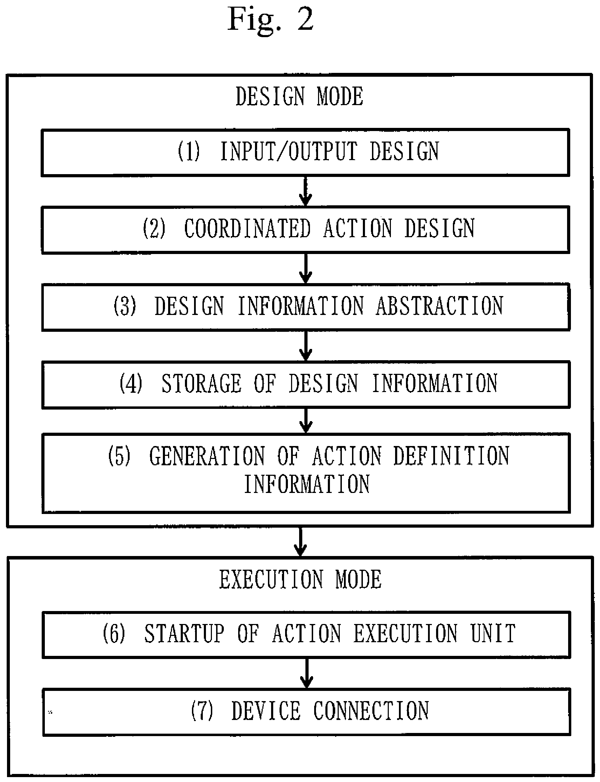

Fig. 2 is a diagram illustrating a processing flow of the action design apparatus 100 according to the first embodiment.

The processing performed by the action design apparatus 100 can be separated into processing in each of the design mode and an execution mode. The design mode corresponds to processing that designs the coordinated action among the plurality of devices 151. The execution mode corresponds to processing that acts the plurality of devices 151 in a coordinated manner according to the designing in the design mode.

The design mode can be broken down into processing of (1) input/output design, (2) coordinated action design, (3) design information abstraction, (4) storage of design information, and (5) generation of action definition information. The execution mode can be broken down into processing of (6) startup of action execution unit and (7) device connection.
(1) Input/output design is the processing in which the input/output defining unit 160 defines the input/output of the device 151 and sets it to the device 151. (2) Coordinated action design is the processing in which the design tool 121 designs the coordinated action among the devices 151 and generates the design information. (3) Design information abstraction is the processing in which the design information abstraction unit 122 converts the design information generated in (2) into the common design information. (4) Storage of design information is the processing in which the action definition generation unit 130 stores the common design information generated in (3). (5) Generation of action definition information is the processing in which the action definition generation unit 130 generates the action definition information from the common design information stored in (4). (6) Startup of action execution unit is the processing in which the action execution unit 140 reads the action definition information to start an action. (7) Device connection is the processing in which the action execution unit 140 is connected to the device 151 to execute the coordinated action.

Note that after the processing of (4) storage of design information, the processing may be returned to (2) to generate the design information by using another design tool 121.

There will now be described premises (A) to (C) then describe the processing in each of (1) to (7) in detail.

### <Premise (A): vocabulary stored in dictionary unit 110>

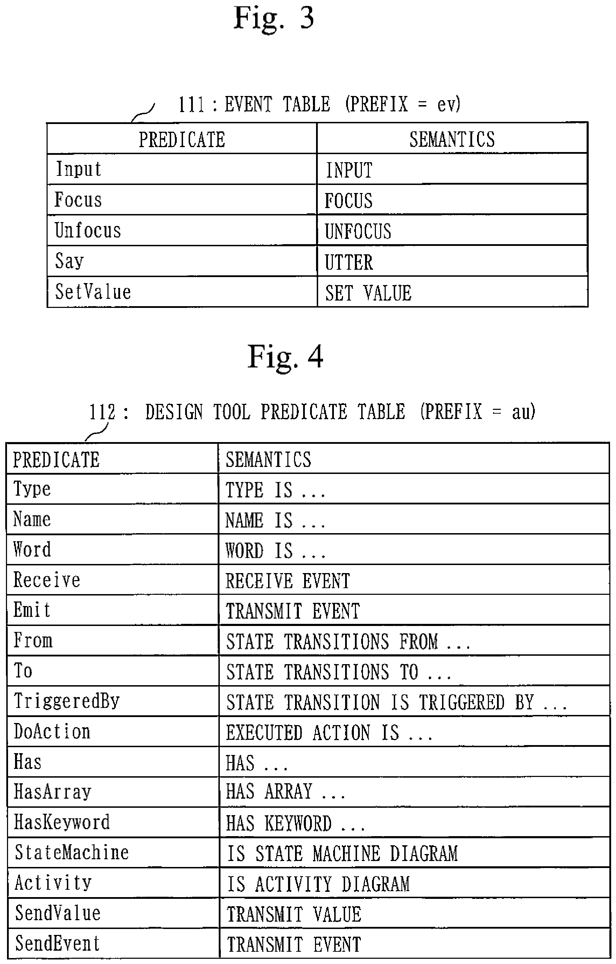

Figs. 3 to 7 are diagrams each illustrating an example of the vocabulary stored in the dictionary unit 110. A specific action of the action design apparatus 100 will be described below by using the vocabulary illustrated in Figs. 3 to 7.

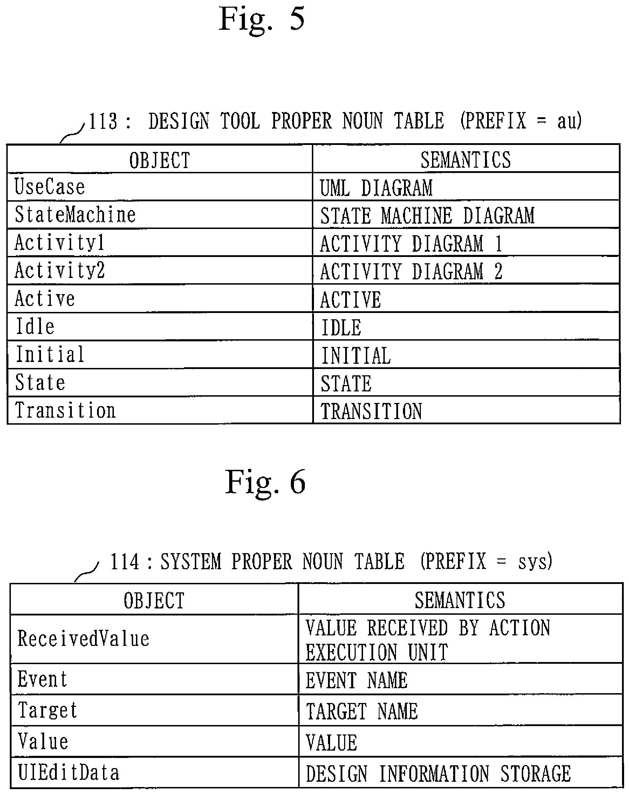

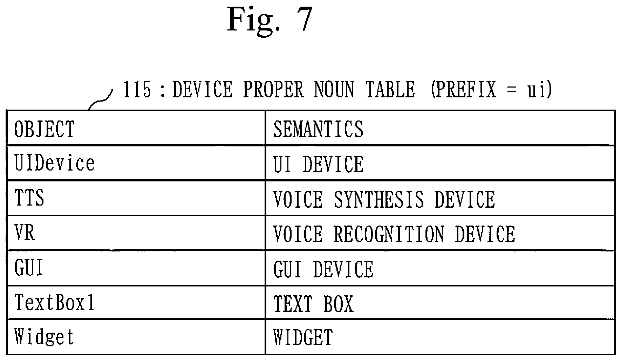

Fig. 3 illustrates an event table 111. Fig. 4 illustrates a design tool predicate table 112. Fig. 5 illustrates a design tool proper noun table 113. Fig. 6 illustrates a system proper noun table 114. Fig. 7 illustrates a device proper noun table 115.

Note that a prefix is attached to each vocabulary for the sake of convenience. A prefix "ev" is attached to the vocabulary in the event table 111. A prefix "au" is attached to the vocabulary used for the design tool. A prefix "sys" is attached to the vocabulary shared by the system (action design apparatus 100). A prefix "ui" is attached to the vocabulary used for the device.

### <Premise (B): common format for communication>

There will be described the common format for communication that is a format of the instruction information and the common output information (hereinafter referred to as an event) transmitted/received by the action execution unit 140 and the input/output information abstraction unit 152 of the device 151.

The common format for communication is a JSON (JavaScript Object Notation) format using proper nouns "sys: Event", "sys: Target", and "sys: Value" stored in the system proper noun table 114 illustrated in Fig. 6.

Here, a predicate stored in the event table 111 in Fig. 3 is set to "sys: Event". A proper noun stored in the dictionary unit 110 is set to "sys: Target". A value is set to "sys: Value".

### <Premise (C): example of action>

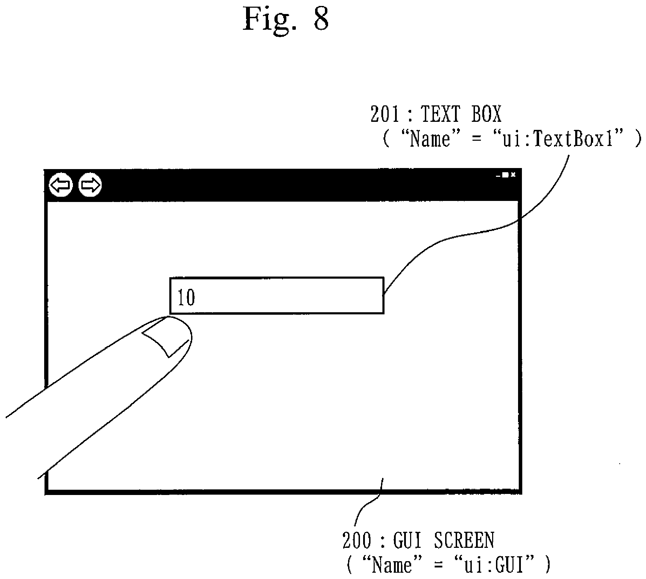

Fig. 8 is a diagram illustrating an example of a screen in which a numeric value is input into a text box 201.

In Fig. 8, there is one text box 201 (the name of which is "ui: TextBox1") in a GUI screen 200 (the name of which is "ui: GUI"). A normal action here involves inputting of a character string into the text box 201 with use of the keyboard 151D. A method of designing the following additional action in addition to the normal action will be described as an example of action.

### (Additional action)

(a) Touch the text box 201 with a finger and focus on the text box 201. (b) A person utters "input numeric value of ten", and the voice recognition device 151A recognizes the utterance so that a numeric value "10" is input into the text box 201. (c) The text box 201 is unfocused once the finger moves off the text box 201, then the voice synthesis device 151B reads the input numeric value as "ten has been input".

### <(1) Input/output design>

The input/output defining unit 160 generates the definition information in which the input/output of the device 151 is defined and sets the definition information to the input/output information abstraction unit 152 of the device 151.

In the example of action described in premise (C), the input/output of the GUI device 151E, the input/output of the voice recognition device 151A, and the input/output of the voice synthesis device 151B are defined and set to the corresponding input/output information abstraction units 152.

The definition information specifying to perform the following input/output action is generated as the input/output definition of the GUI device 151E.

The GUI device 151E transmits EventStr1 to the action execution unit 140 when the text box 201 is touched.

```
        EventStr1 =
        {"sys:Event":"ev:Focus","sys:Target":"ui:TextBox1","sys:Value":""}
```

The GUI device 151E transmits EventStr2 to the action execution unit 140 when a finger is released from the text box 201. At this time, a numeric value input into the text box 201 is set to "sys: Value". Here, EventStr2 is illustrated as an example when "10" is input into the text box 201.

```
        EventStr2 =
        {"sys:Event":"ev:Unfocus","sys:Target":"ui:TextBox1","sys:Value":"10"}
```

When receiving EventStr3 from the action execution unit 140, the GUI device 151E sets a value of "sys: Value" to the text box 201. Here, EventStr3 is illustrated as an example when "10" is input as "sys: Value".

```
        EventStr3 =
        {"sys:Event":"ev:SetValue","sys:Target":"ui:TextBox1","sys:Value":"10"}
```

The definition information specifying to perform the following input/output action is generated as the input/output definition of the voice recognition device 151A.

With "input numeric value" as a recognition keyword, the voice recognition device 151A transmits EventStr4 to the action execution unit 140 when the recognition keyword is uttered. At this time, a numeric value uttered following the recognition keyword is set to "sys: Value". Here, EventStr4 is illustrated as an example when "input numeric value of ten" is uttered.

```
EventStr4 =
 {"sys:Event":"ev:Input","sys:Target":"TextBox1","sys:Value":"10"}
```

### The definition information specifying to perform the following input/output action is generated as the input/output definition of the voice synthesis device 151E.

When receiving EventStr5 from the action execution unit 140, the voice synthesis device 151B utters what is set to "sys: Value". Here, EventStr5 is illustrated as an example when "10" is input as "sys: Value". In this case, "ten has been input" is uttered, for example.

```
        EventStr5={"ev:Event":"ev:Say","sys:Target":"TTS","sys:Value":"10"}
```

### <(2) Coordinated action design>

The design tool 121 generates the design information in which the coordinated action among the devices 151 is specified.

In the example of action described in premise (C), the coordinated action among the GUI device 151E, the voice recognition device 151A and the voice synthesis device 151B is designed.

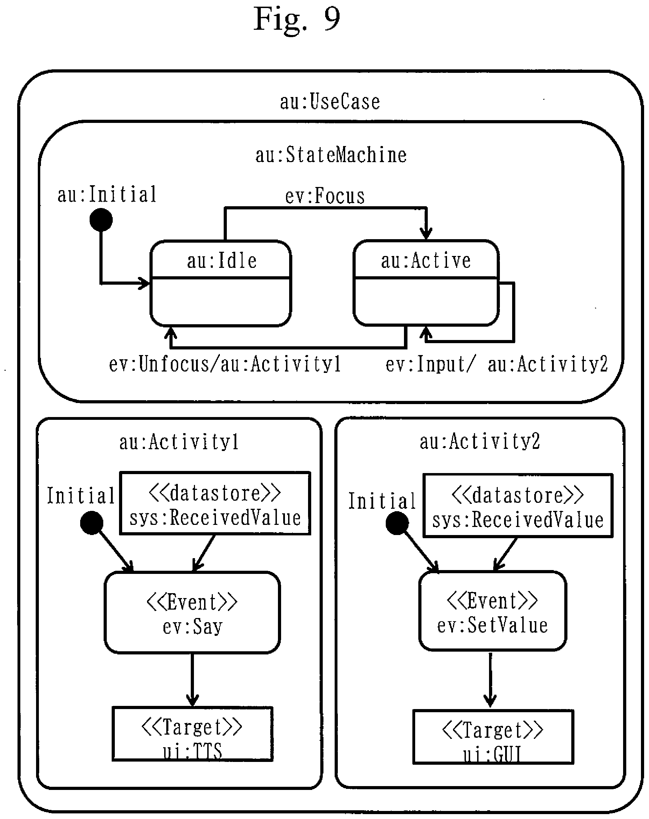

Fig. 9 is a diagram illustrating the coordinated action designed by the UML design tool 121B.

The UML design tool 121B uses the vocabulary stored in the dictionary unit 110 to generate a UML diagram as the design information according to the action of the device 151 operated by a user.

Fig. 9 illustrates an example where the coordinated action is expressed as "au: UseCase". The "au: UseCase" includes a state machine diagram (au: StateMachine) and two activity diagrams (au: Activity1 and au: Activity2).

The diagram "au: StateMachine" illustrates a state transition of "ui: TextBox1".

The diagram "au: StateMachine" illustrates the following.

When the action execution unit 140 is initialized, the state transitions from an "au: Initial" state being an initial state to an "au: Idle" state. When the action execution unit 140 receives "sys: Event" = "ev: Focus" in the "au: Idle" state, the state transitions to an "au: Active" state. When the action execution unit 140 receives "sys: Event" = "ev: Input" in the "au: Active" state, the action execution unit 140 executes "au: Activity2". When the action execution unit 140 receives "sys: Event" = "ev: Unfocus" in the "au: Active" state, the action execution unit 140 executes "au: Activity1" and transitions to the "au: Idle" state.

Each of the "au: Activity1" and "au: Activity2" indicates an event transmitted from the action execution unit 140 to the device 151.

The "au: Activity1" indicates that the action execution unit 140 transmits EventStr5 to the voice synthesis device 151B (ui: TTS).

Note that "10" is set to "sys: Value" in EventStr5. In reality, however, "sys: Value" of the event received by the action execution unit 140 is set to "sys: Value". The value of "sys: Value" set to "10" is thus replaced with "sys: ReceivedValue" in EventStr5 to be described as follows.

```
        EventStr5 =
        {"sys:Event":"ev:Say","sys:Target":"ui:TTS","sys:Value":"sys:ReceivedValue"}
```

In the example of action described in premise (C), the value of "sys: Value" in EventStr2 transmitted from the GUI device 151E when the event "ev: Unfocus" occurs (when the finger is released from the text box 201) is set to "sys: ReceivedValue".

The "au: Activity2" indicates that the action execution unit 140 transmits EventStr3 to the GUI device 151E (ui: GUI).

Note that "10" is set to "sys: Value" in EventStr3. In reality, however, "sys: Value" of the event received by the action execution unit 140 is set to "sys: Value". The value of "sys: Value" set to "10" is thus replaced with "sys: ReceivedValue" in EventStr3 to be described as follows.

```
        EventStr3 =
   {"sys:Event":"ev:SetValue","sys:Target":"ui:TextBox1","sys:Value":"sys:ReceivedValue"}
```

In the example of action described in premise (C), the value of "sys: Value" in EventStr4 transmitted from the voice recognition device 151A when the event "ev: Input" occurs is set to "sys: ReceivedValue".

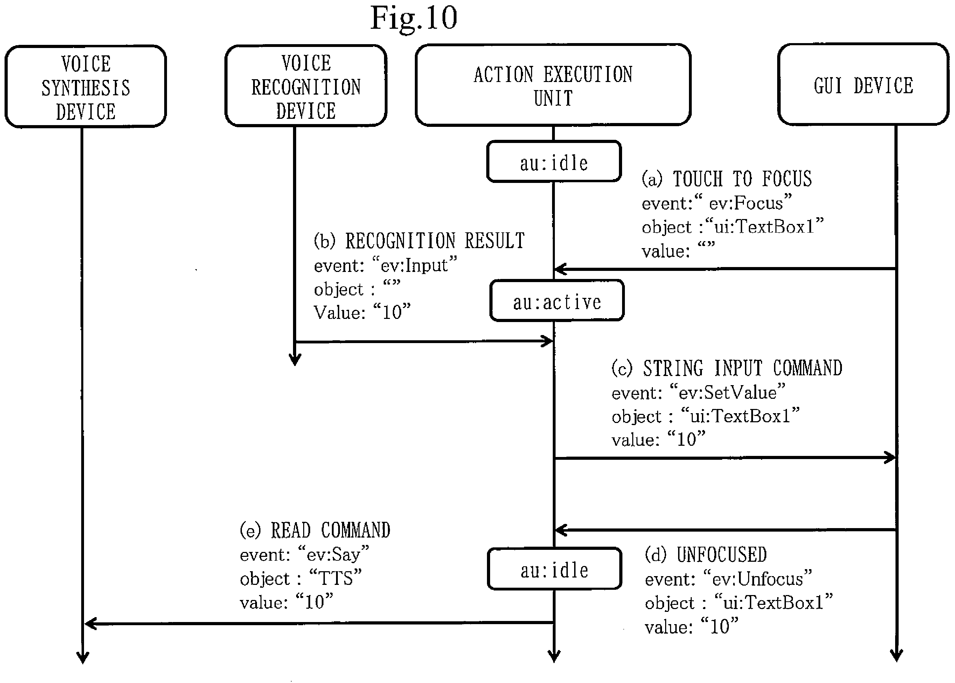

Fig. 10 is a diagram illustrating the coordinated action designed by the sequence diagram design tool 121C. The sequence diagram in Fig. 10 illustrates the same coordinated action as that illustrated in the UML diagram in Fig. 9.

The sequence diagram design tool 121C uses the vocabulary stored in the dictionary unit 110 to generate a sequence diagram as the design information according to the action of the device 151 operated by a user.

Fig. 10 illustrates a case where the coordinated action is represented as the sequence diagram. The sequence diagram in Fig. 10 illustrates the following.

(a) When the text box 201 is touched, the GUI device 151E transmits the event string {EventStr1) with event: "ev: Focus", object: "ui: TextBox1", and value:"" to the action execution unit 140. The action execution unit 140 then transitions from the "au: Idle" state to the "au: Active" state.

(b) When the recognition keyword is uttered, the voice recognition device 151A transmits the event string (EventStr4) with event: "ev: Input", object: "", and value: "10" to the action execution unit 140. (c) The action execution unit 140 transmits the event string (EventStr3) with event: "ev: SetValue", object: "ui: TextBox1", and value: "10" to the GUI device 151E.

(d) When the finger is released from the text box 201, the GUI device 151E transmits the event string (EventStr2) with event: "ev: Unfocus", object: "ui: TextBox1", and value: "10" to the action execution unit 140. (e) The action execution unit 140 transmits the event string (EventStr5) with event: "ev: Say", object: "TTS", and value: "10" to the voice synthesis device 151E.

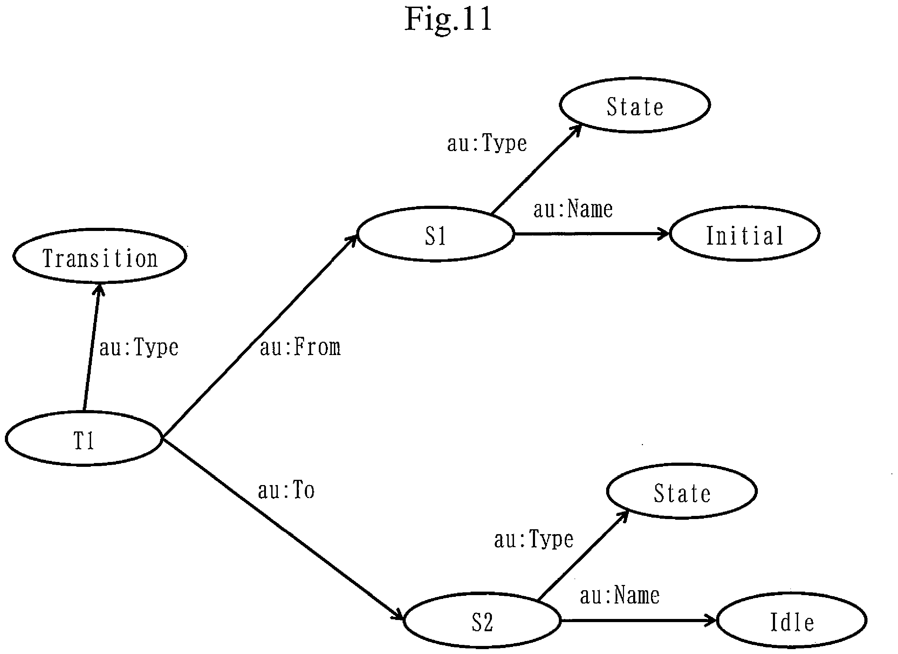

Fig. 11 is a diagram illustrating the coordinated action designed by the graph design tool 121D. A directed graph in Fig. 11 illustrates a part of the coordinated action illustrated in the UML diagram in Fig. 9.

The graph design tool 121D uses the vocabulary stored in the dictionary unit 110 to generate a directed graph as the design information according to the action of the device 151 operated by a user.

In Fig. 11, a subject and an object are represented as ellipses, and a predicate is represented as an arrow from the subject to the object. Note that T1 in Fig. 11 represents an arrow from "au: Initial" to "au: Idle" in Fig. 9, S1 in Fig. 11 represents "au: Initial" in Fig. 9, and S2 in Fig. 11 represents "au: Idle" in Fig. 9.

The directed graph in Fig. 11 illustrates the following. A type (au: Type) of T1 is transition (Transition). A transition source (au: From) and a transition destination (au: To) of T1 are S1 and S2, respectively. A type (au: Type) and a name (au: Name) of S1 are a state (State) and initial (au: Initial), respectively. A type (au: Type) and a name (au: Name) of S2 are a state (State) and initial (au: Idle), respectively.

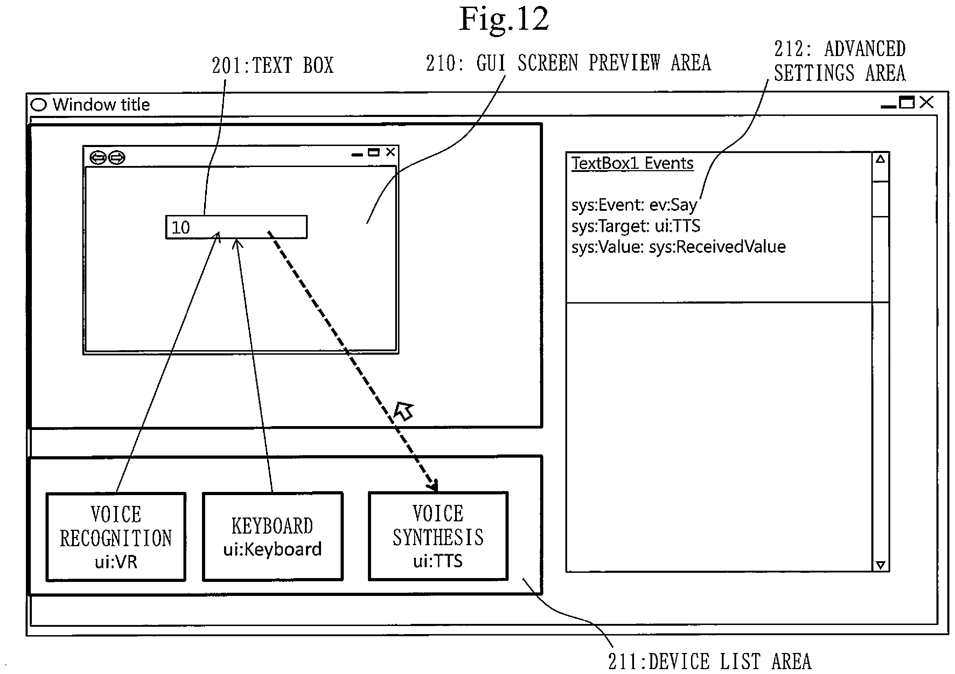

Fig. 12 is a diagram illustrating the coordinated action designed by the GUI design tool 121E. A preview screen in Fig. 12 illustrates a part of the coordinated action illustrated by the UML diagram in Fig. 9.

The preview screen in Fig. 12 includes a GUI screen preview area 210, a device list area 211, and an advanced settings area 212.

The GUI screen preview area 210 is an area displaying the GUI screen. The device list area 211 is an area displaying a list of the devices 151 included in the device group 150. The advanced settings area 212 is an area in which advanced settings of a selected event are described.

Fig. 12 illustrates a state in which a pointing device such as a mouse is used to draw a line from the text box 201 displayed in the GUI screen preview area 210 to the voice synthesis device 151B displayed in the device list area 211. In this case, the advanced settings area 212 displays a parameter or the like of an event that is transmitted/received by the voice synthesis device 151B related to the text box 201. The event that is transmitted/received by the voice synthesis device 151B related to the text box 201 can be designed by editing information displayed in the advanced settings area 212.

### <(3) Design information abstraction>

The design information abstraction unit 122 converts the design information generated by the design tool 121 into the common design information by expressing it semantically. The design information abstraction unit 122 then transmits the generated common design information to the action definition generation unit 130.

The semantic expression in this case refers to description using three elements being a subject, a predicate and an object while using the vocabulary stored in the dictionary unit 110 at least as the predicate. A term uniquely specified in the action design apparatus 100 is used as the subject, the vocabulary stored in the dictionary unit 110 is used as the predicate, and either a term uniquely specified in the action design apparatus 100 or the vocabulary stored in the dictionary unit 110 is used as the object.

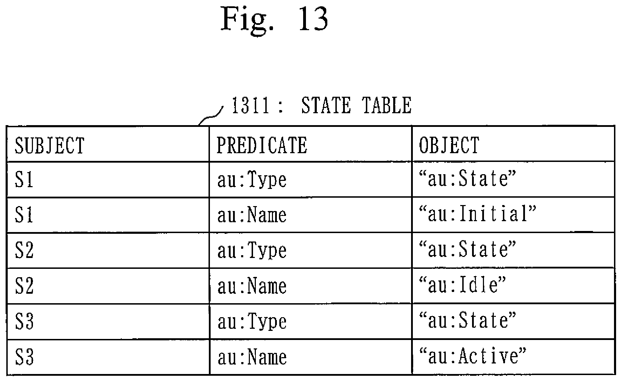

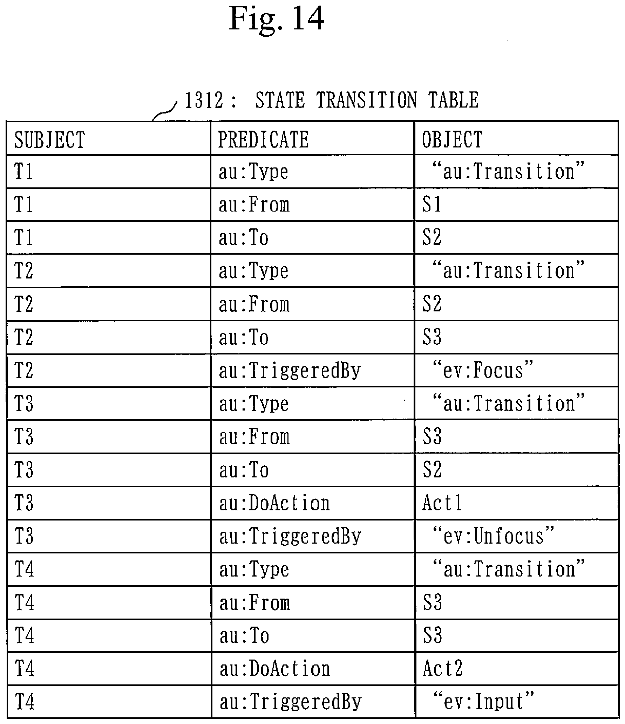

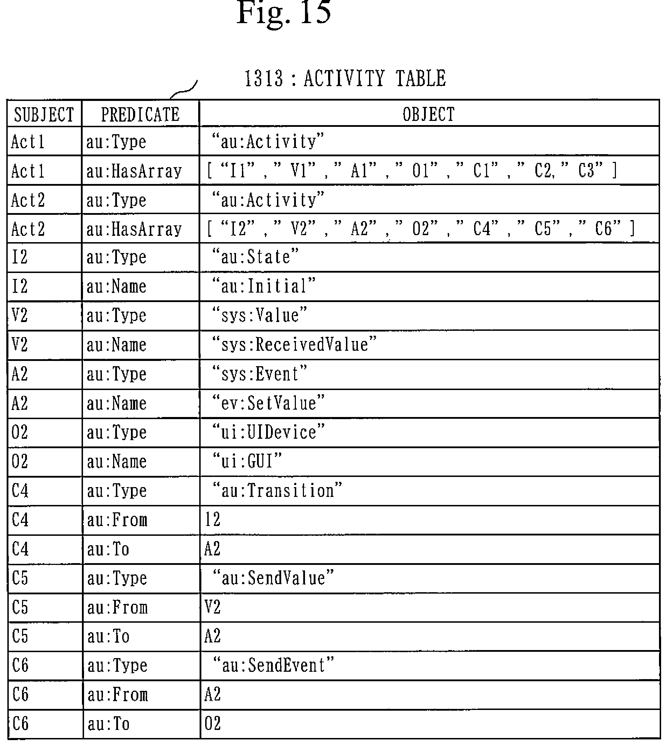

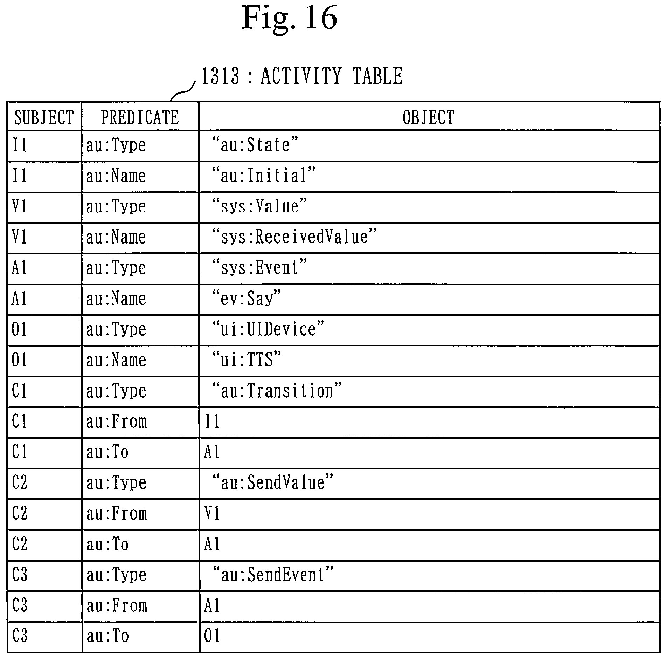

Figs. 13 to 16 are tables illustrating the common design information. Figs. 13 to 16 illustrate the common design information generated from the design information pertaining to the example of action described in premise (C). Fig. 13 illustrates a state table 1311. Fig. 14 illustrates a state transition table 1312. Each of Figs. 15 and 16 illustrates an activity table 1313.

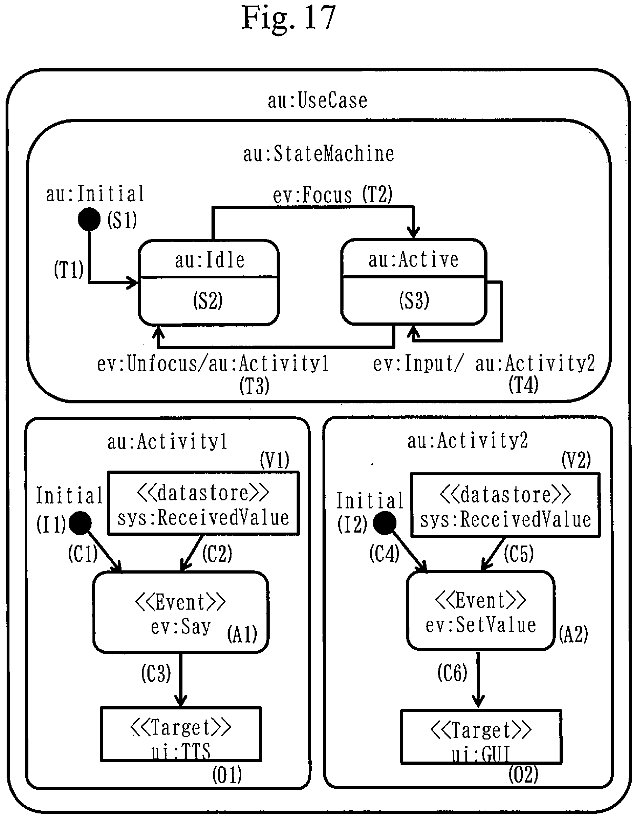

Fig. 17 is a diagram illustrating the common design information. Fig. 17 is based on the UML diagram in Fig. 9, to which a term used in Figs. 13 to 16 is attached in parentheses. Here, there will be described the common design information on the basis of the UML diagram being the design information generated by the UML design tool 121B. In principle, the same common design information is generated from the design information generated by another design tool 121.

The common design information illustrated in Figs. 13 to 16 will be described with reference to Fig. 17.

Fig. 13 will be described first.

Two rows of a subject S1 indicate the "au: Initial" state. Specifically, it is indicated the type (au: Type) and the name (au: Name) of the two rows of the subject S1 are the state (au: State) and the initial (au: Initial), respectively.

Two rows of a subject S2 indicate the "au: Idle" state. Two rows of a subject S3 indicate the "au: Active" state. The two rows of each of the subjects S2 and S3 are specifically read in a manner similar to that the two rows of the subject S1 are read.

Fig. 14 will now be described.

Three rows of a subject T1 indicate a transition from the "au: Initial" state to the "au: Idle" state. Specifically, it is indicated the type (au: Type) of the three rows of the subject T1 is the transition (au: Transition) from S1 (au: From) to S2 (au: To). Here, as described above, the subjects S1 and S2 indicate the "au: Initial" state and the "au: Idle" state, respectively.

Four rows of a subject T2 indicate a transition from the "au: Idle" state to the "au: Active" state by the event "ev: Focus". Specifically, top three rows of the four rows of the subject T2 are read in the same manner as the three rows of the subject T1, and the last row of the subject T2 indicates that the name of an event triggering the state transition (au: TriggeredBy) is the "ev: Focus".

Five rows of a subject T3 indicate that "Act1" is executed by the event "ev: Unfocus" and that a state transitions from the "au: Active" state to the "au: Idle" state. Specifically, top three rows and the last row of the five rows of the subject T3 are read in the same manner as the four rows of the subject T2, and the remaining row of the subject T3 indicates that an action executed (au: DoAction) is the "Act1".

Five rows of a subject T4 indicate that "Act2" is executed by the event "ev: Input" and that a state transitions from the "au: Active" state to the "au: Active" state. The five rows of the subject T4 are read in the same manner as the five rows of the subject T3.

Figs. 15 and 16 will now be described.

Two rows of the subject Act1 indicate that the type (au: Type) is "au: Activity" having an array (au: HasArray) of ["I1", "V1", "A1", "O1", "C1", "C2", "C3"].

Two rows of the subject Act2 indicate that the type (au: Type) is "au: Activity" having an array (au: HasArray) of ["12", "V2", "A2", "O2", "C4", "C5", "C6"].

Two rows of a subject 12 indicate the "au: Initial" state. Two rows of a subject V2 indicate a value received by the action execution unit 140. Two rows of a subject A2 indicate an event "ev: SetValue". Two rows of a subject O2 indicate that it is the text box 201. Three rows of a subject C4 indicate a transition from the initial state (12) to the event "ev: SetValue" (A2). Three rows of a subject C5 indicate that the value (V2) received by the action execution unit 140 is transmitted to the event "ev: SetValue" (A2). Three rows of a subject C6 indicate that the event "ev: SetValue" (A2) is transmitted to the GUI device 151E (O2).

Two rows of a subject I1 indicate the "au: Initial" state. Two rows of a subject V1 indicate a value received by the action execution unit 140. Two rows of a subject A1 indicate an event "ev: Say". Two rows of a subject O1 indicate that it is the voice synthesis device 151B. Three rows of a subject C1 indicate a transition from the initial state (I1) to the event (A1). Three rows of a subject C2 indicate that the value (V1) received by the action execution unit 140 is transmitted to the event (A1). Three rows of the subject C6 indicate that the event "ev: SetValue" (A1) is transmitted to the voice synthesis device 151B (O1).

### <(4) Storage of design information>

The action definition generation unit 130 stores the common design information transmitted from the design information abstraction unit 122 into the design information storage 131.

There is also a case where a plurality of the design tools 121 generates a plurality of pieces of design information in which the action of one device 151 is specified. In this case as well, each common design information is semantically expressed so that the action definition generation unit 130 may simply store each common design information to allow each common design information to be integrated properly.

There is a case, for example, where the state table in Fig. 13 and the state transition table in Fig. 14 are generated from the design information designed by the UML design tool 121B while the activity table in Figs. 15 and 16 is generated from the design information designed by the tabular design tool 121A. In this case as well, the action definition generation unit 130 may simply store these tables into the design information storage 131 to realize the example of action described in premise (C) as a whole.

Note that after completing the processing of (4) storage of design information, the coordinated action may be designed again by returning to the processing of (2) coordinated action design.

It may be configured, for example, such that the design information is generated partway by the UML design tool 121B in the processing of (2) coordinated action design, the common design information generated from the design information is stored into the design information storage 131 in the processing of (4) storage of design information, and then the processing is returned to (2) coordinated action design to generate the rest of the design information by the GUI design tool 121E. In this case, in the GUI design tool 121E, the corresponding design information abstraction unit 122 reads the common design information stored in the design information storage 131 and converts it into the design information of the GUI design tool 121E. Accordingly, the GUI design tool 121E can generate the design information that is continuous with the design information already designed by the UML design tool 121B.

### <(5) Generation of action definition information>

The action definition generation unit 130 generates the action definition information defining the action of the action execution unit 140 from the common design information stored in the design information storage 131. The action definition generation unit 130 then transmits the generated action definition information to the action execution unit 140, which stores the transmitted action definition information into the action definition storage 141.

The action definition generation unit 130 generates the action definition information in a format corresponding to the implemented form of the action execution unit 140. The action definition generation unit 130 generates the action definition information in the SCXML that W3C is working to standardize, for example. The action definition generation unit 130 may also generate the action definition information in a source code such as C++.

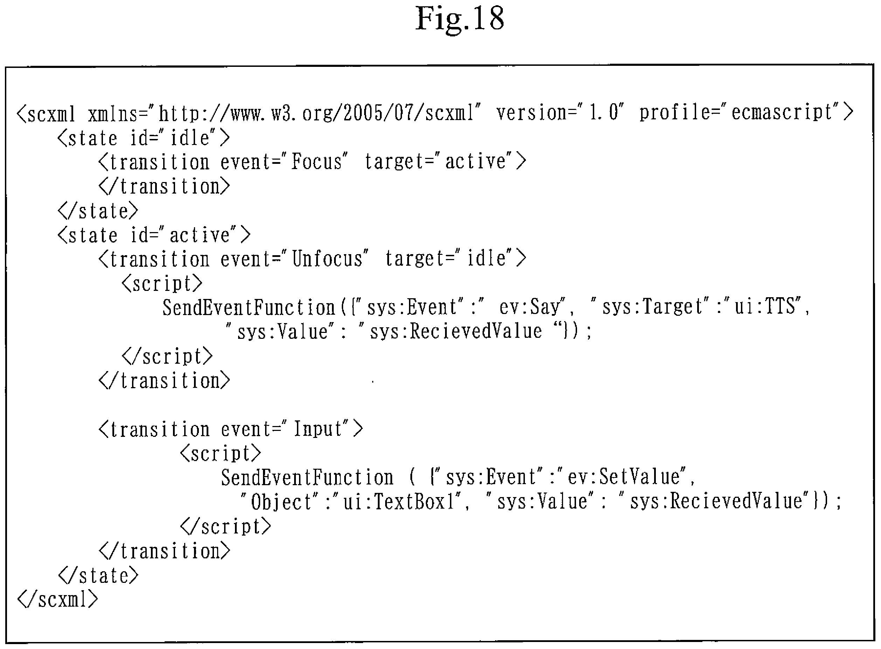

Fig. 18 is a diagram illustrating the action definition information described in the SCXML. Fig. 18 illustrates the action definition information generated from the common design information related to the example of action described in premise (C).

In Fig. 18, "SendEventFunction ({"sys: Event": "ev: Say", "sys: Target": "ui: TTS", "sys: Value": "sys: RecievedValue"});" indicates that the action execution unit 140 transmits the EventStr5 to the voice synthesis device 151B.

Moreover, "SendEventFunction ({"sys: Event": "ev: SetValue", "Object": "ui: TextBox1", "sys: Value": "sys: RecievedValue"});" indicates that the action execution unit 140 transmits the EventStr3 to the voice synthesis device 151B.

### <(6) Startup of action execution unit>

The action execution unit 140 reads the action definition information from the action definition storage 141 to start an action. This allows the action execution unit 140 to be in a state accepting connection from the device 151.

The action execution unit 140 corresponds to SCXML runtime when the action definition information is described in the SCXML format, for example.

### <(7) Device connection>

The action execution unit 140 is connected to the device 151. The action execution unit 140 then acts the device 151 in a coordinated manner according to a user's operation on the device 151 and the action definition information being read.

As described above, the action design apparatus 100 of the first embodiment converts the design information generated by the design tool 121 into the common design information. As a result, the plurality of design tools 121 is used to be able to easily design the coordinated action of the device 151.

That is, it is made easy to design the information partway by one design tool 121 and design the following information by another design tool 121. Moreover, designing a part of the information on one action by each of the plurality of design tools 121 and integrating the information are made easy. This as a result makes it easy for a plurality of persons to design one action.

Moreover, the action design apparatus 100 according to the first embodiment describes the event transmitted/received between the action execution unit 140 and the device 151 by using the common format and the vocabulary stored in the dictionary unit 110. This as a result allows the device 151 to be easily replaced.

In the aforementioned description, for example, the voice recognition device 151A transmits the EventStr4 to the action execution unit 140 upon receiving the input of "10". However, the input operation similar to that of the voice recognition device 151A can also be realized when another device 151 is adapted to transmit the EventStr4 to the action execution unit 140 upon receiving the input of "10".

Although not particularly mentioned in the aforementioned description, the definition information of the device 151 defined by the input/output defining unit 160 may also be expressed semantically as with the design information.

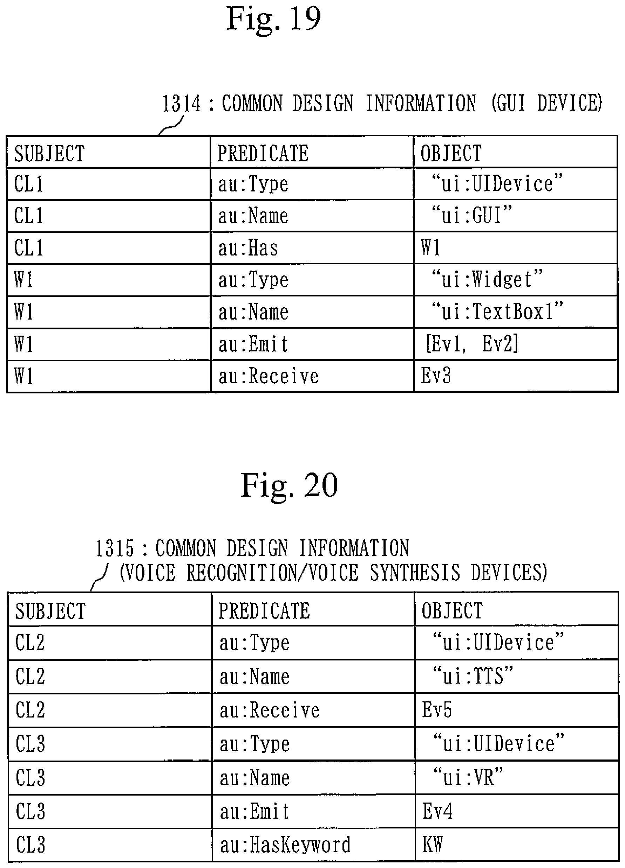

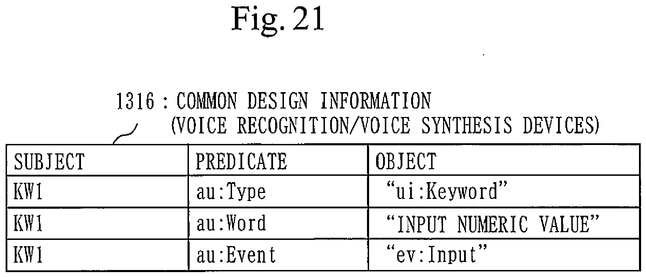

Figs. 19 to 21 are diagrams illustrating the common design information generated by converting the design information. Fig. 19 is a diagram illustrating the common design information generated by converting the design information that is generated as an input/output definition of the GUI device 151E. Figs. 20 and 21 are diagrams each illustrating the common design information generated by converting the design information that is generated as an input/output definition of the voice recognition device 151A and the voice synthesis device 151B.

The common design information of the GUI device 151E illustrated in Fig. 19 will now be described.

Three rows of a subject CL1 indicate that the type (au: Type) and the name (au: Name) of CL1 are a UI device (ui: UIDevice) and the GUI device (ui: GUI), respectively, and that CL1 has (au: Has) W1.

Four rows of a subject W1 indicate that the type (au: Type) and the name (au: Name) of W1 are a widget (ui: Widget) and the text box 201 (ui: TextBox1), respectively, and that W1 transmits the EventStr1 (Ev1) and EventStr2 (Ev2) to the action execution unit 140 while receiving the EventStr3 (Ev3) from the action execution unit 140.

The common design information of the voice recognition device 151A and the voice synthesis device 151B illustrated in Figs. 20 and 21 will now be described.

Three rows of a subject CL2 in Fig. 20 indicate that the type (au: Type) and the name (au: Name) of CL2 are the UI device (ui: UIDevice) and the voice synthesis device (ui: TTS), respectively, and that CL2 receives (au: Receive) the EventStr5 (Ev5) from the action execution unit 140.

Four rows of a subject CL3 in Fig. 20 indicate that the type (au: Type) and the name (au: Name) of CL3 are the UI device (ui: UIDevice) and the voice recognition device (ui: VR), respectively, and that CL3 transmits (au: Emit) the EventStr4 (Ev4) to the action execution unit 140 when having a KW (au: HasKeyword).

Three rows of a subject KW in Fig. 21 indicate that the type (au: Type) of KW is a keyword (ui: Keyword), and that an input event (ev: Input) is executed when a word is "input numeric value".

Moreover, in the aforementioned description, the design information is generated by the design tool 121, and the design information is converted into the common design information by the design information abstraction unit 122. The common design information may however be generated directly by the tabular design tool 121A, for example. In other words, the tabular design tool 121A or the like may be used to edit the value in the tables illustrated in Figs. 13 to 16.

Moreover, in the aforementioned description, the device group 150 includes the UI device and the control device. The device group 150 may also include a sensor device such as a thermometer and an illuminometer in addition to the UI device and the control device. Moreover, in addition to what is described above, the UI device may include a line-of-sight recognition device and a brain wave measurement device that input information in response to a user operation, and a vibration apparatus that outputs information.

### Second Embodiment

In a second embodiment, there will be described a way to increase efficiency of a test performed on action definition information generated in a design mode. More specifically, in the second embodiment, there will be described a test performed on a coordinated action by simulating output of a nonexistent device 151 when some or all devices 151 are not physically present.

What is different from the first embodiment will mainly be described in the second embodiment.

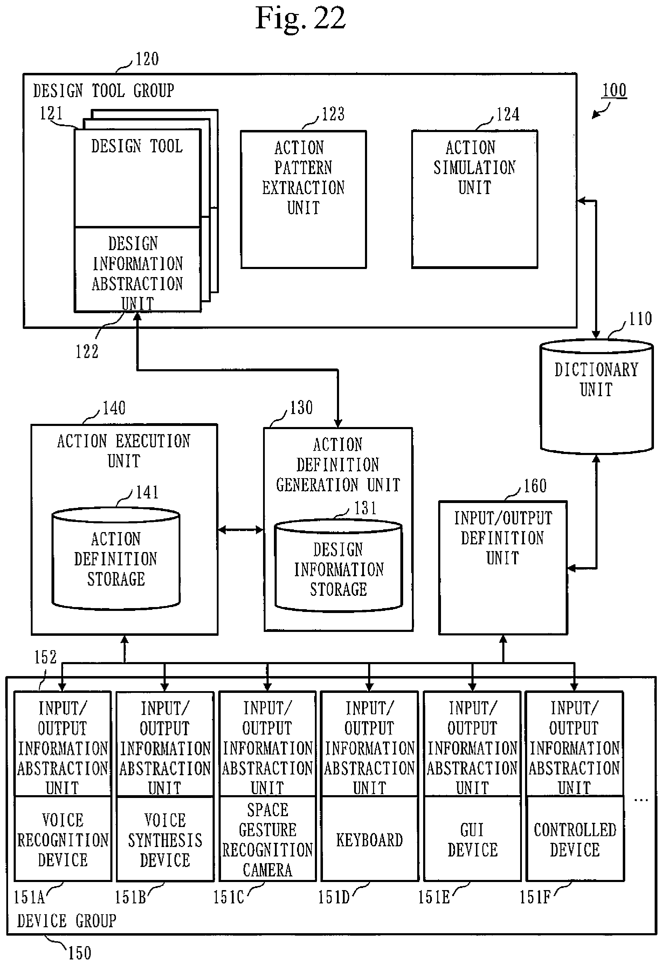

Fig. 22 is a block diagram of an action design apparatus 100 according to the second embodiment.

In the action design apparatus 100 illustrated in Fig. 22, a design tool group 120 includes an action pattern extraction unit 123 and an action simulation unit 124 in addition to the configuration included in the design tool group 120 illustrated in Fig. 1.

The action pattern extraction unit 123 extracts an action pattern to be tested from common design information stored in a design information storage 131.

The action simulation unit 124 acquires definition information on a device 151 that is not physically present. According to the definition information, the action simulation unit 124 takes the place of the device 151 not physically present and simulates output of the device 151.

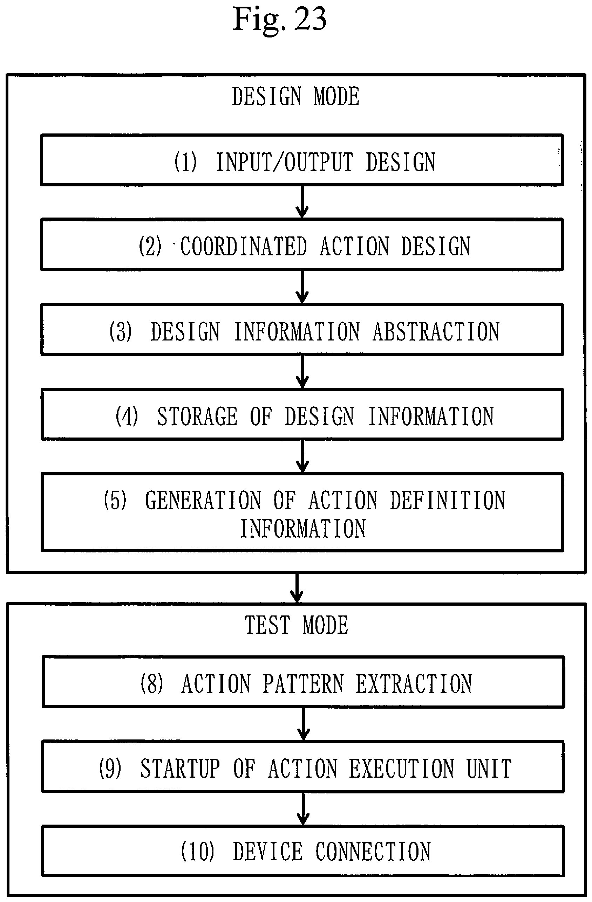

Fig. 23 is a diagram illustrating a processing flow of the action design apparatus 100 according to the second embodiment.

The processing performed by the action design apparatus 100 can be separated into processing in each of a design mode and a test mode. The processing performed in the design mode is identical to that of the first embodiment. The test mode corresponds to processing that tests a coordinated action of a plurality of the devices 151 according to the designing in the design mode.

The test mode can be broken down into processing of (8) action pattern extraction, (9) startup of action execution unit and (10) device connection.

(8) Action pattern extraction is the processing in which the action pattern extraction unit 123 extracts an action pattern from the common design information. (9) Startup of action execution unit is the processing in which an action execution unit 140 reads action definition information to start an action. (10) Device connection is the processing in which the action execution unit 140 is connected to the device 151 and the action simulation unit 124 to execute the action pattern extracted in (8).

The processing performed in each of (8) to (10) will now be described in detail.

### <(8) Action pattern extraction>

The action pattern extraction unit 123 extracts the action pattern to be tested from the common design information stored in the design information storage 131.

When the example of action described in premise (C) is to be tested, for example, the action pattern extraction unit 123 extracts each subject from the state transition table illustrated in Fig. 14 to extract four state transition patterns (a) to (d) below as the action patterns.
(a) A transition from an "au: Initial" state to an "au: Idle" state indicated by a subject T1
(b) A transition from the "au: Idle" state to an "au: Active" state indicated by a subject T2 (when "ev: Focus" is received)
(c) A transition from the "au: Active" state to the "au: Idle" state indicated by a subject T3 (when "ev: Unfocus" is received)
(d) A transition from the "au: Active" state to the "au: Active" state indicated by a subject T4 (when "ev: Input" is received)

### <(9) Startup of action execution unit>

The processing performed here is identical to that of (6) startup of action execution unit in the first embodiment.

### <(10) Device connection>

The action execution unit 140 is connected to the device 151 that is physically present and the action simulation unit 124. The action execution unit 140 then acts the device 151 in a coordinated manner according to a user's operation on the device 151 and the action definition information being read.

Here, the action execution unit 140 transmits, to the action simulation unit 124, instruction information relevant to the device 151 that is not physically present. The action simulation unit 124 simulates output of the device 151 when the instruction information is transmitted, and transmits common output information according to the instruction information to the action execution unit 140. This allows the coordinated action to be tested even when some or all of the devices 151 are not physically present.

Fig. 9 will be referenced to describe a case where a voice recognition device 151A is not physically present when the example of action described in premise (C) is tested.

In this case, among the four action patterns (a) to (d), the voice recognition device 151A does not act in the action patterns (a) to (c), which can thus be tested as normal.

When the action pattern (d) is to be tested, the action execution unit 140 first transitions the state of "ui: TextBox1" to the "au: Active" state to be in a state waiting for "ev: Input" to be received. Next, the action execution unit 140 instructs the action simulation unit 124 to transmit EventStr4. Upon receiving the instruction, the action simulation unit 124 transmits EventStr4 to the action execution unit 140. The action execution unit 140 receives EventStr4 and then executes "au: Activity2". Note that a predetermined value is set as a value of "sys: Value" in EventStr4.

The action execution unit 140 may also display, on a display device or the like, the action pattern extracted by the action pattern extraction unit 123 and cause a user to recognize the pattern and execute each action pattern. Moreover, when no device 151 is physically present, the action execution unit 140 may sequentially execute the action pattern extracted by the action pattern extraction unit 123 with the action simulation unit 124.

As described above, in the action design apparatus 100 of the second embodiment, the action simulation unit 124 simulates the output of the device 151 that is not physically present. Therefore, the coordinated action among the devices 151 can be tested even when the device 151 is not ready.

Moreover, the action pattern extraction unit 123 extracts the action pattern by referring to the common design information. The action pattern can thus be tested without omission.

Note that the action simulation unit 124 simulates the output of the device 151 according to the definition information of the device 151. The implementation of the action simulation unit 124 can be facilitated when the definition information is expressed semantically as described at the end of the first embodiment.

### Third Embodiment

In a third embodiment, there will be described a way to design a coordinated action in the processing of (2) coordinated action design in Fig. 2 by acting a design tool 121 with a device 151 being operated by a user.

What is different from the first embodiment will mainly be described in the third embodiment.

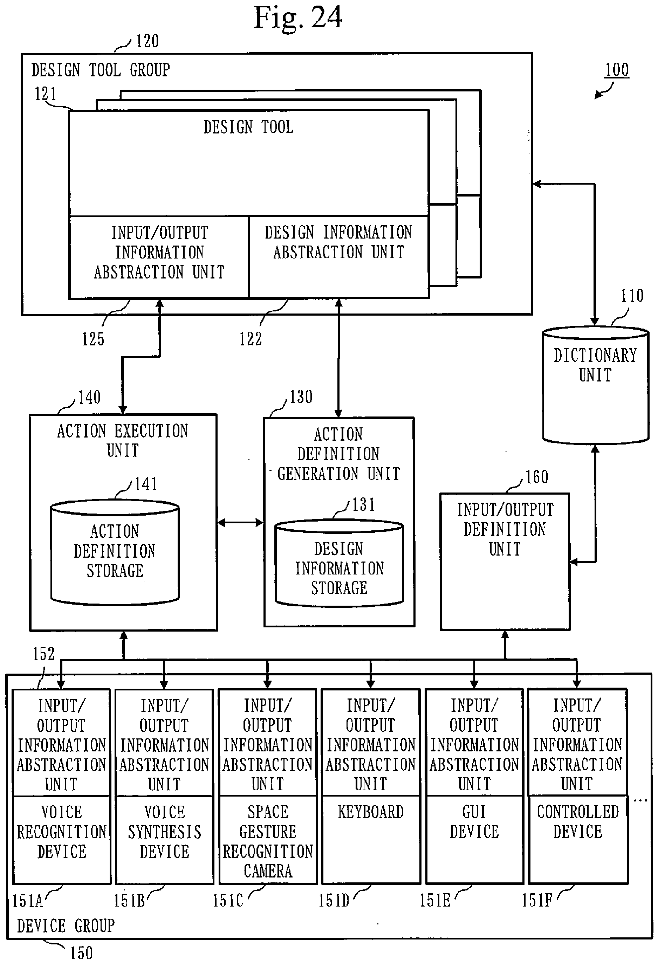

Fig. 24 is a block diagram of an action design apparatus 100 according to the third embodiment.

In the action design apparatus 100 illustrated in Fig. 24, a design tool group 120 includes an input/output information abstraction unit 125 corresponding to each design tool 121 in addition to the configuration included in the design tool group 120 illustrated in Fig. 1.

On the basis of action definition information stored in an action definition storage 141, an action execution unit 140 transmits instruction information to the design tool 121 according to common output information transmitted from the device 151 and acts the design tool 121. Here, the instruction information is described according to a common format for communication with use of vocabulary stored in a dictionary unit 110.

The input/output information abstraction unit 125 converts the instruction information transmitted from the action execution unit 140 into a specific command of the design tool 121. When the instruction information is transmitted from the action execution unit 140, the design tool 121 acts on the basis of the specific command converted by the input/output information abstraction unit 125.

In principle, an event to be transmitted to the action execution unit 140 by the input/output information abstraction unit 152 is generated as definition information according to an operation on the device 151. Then, an event to be transmitted to the design tool group 120 by the action execution unit 140 is generated as design information according to the event being received.

This allows the coordinated action to be designed in the processing of (2) coordinated action design in Fig. 2 by acting the design tool 121 with the device 151 being operated by a user.

There will now be described an example of a characteristic action in which the design tool 121 is acted by the device 151 being operated by the user.

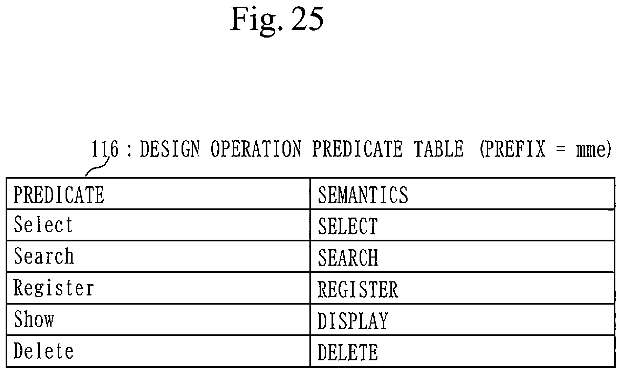

The dictionary unit 110 stores a design operation predicate table 116 illustrated in Fig. 25 in addition to the tables illustrated in Figs. 3 to 7. The design operation predicate table 116 includes vocabulary for design operation used when the design tool 121 is acted to generate the design information. A prefix "mme" is attached to the vocabulary for the design operation.

### (First example: display of design information)

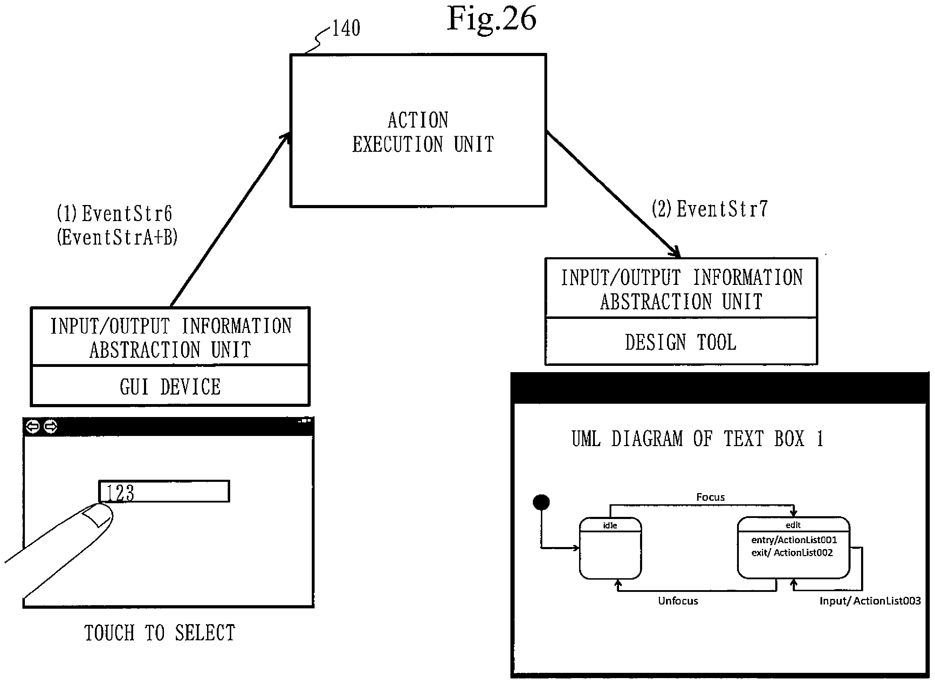

Fig. 26 is a diagram illustrating a first example and a second example.

In the first example, a GUI device 151E displays a GUI screen 220 on a touch panel and displays the design information generated by the design tool 121 by operating the GUI device 151E (touch panel) and a voice recognition device 151A.

The GUI screen 220 includes a text box (the name of which is TextBox 1). There is assumed a case where a user wishes to check the design information related to the text box.

Note that in this case, a UML design tool 121B is preselected as the design tool 121.

In this case, for example, definition information specifying to perform the following input/output action is generated as an input/output definition of the GUI device 151E and the voice recognition device 151A in (1) input/output design.

The GUI device 151E transmits EventStr6 to the action execution unit 140 when the text box is touched. The voice recognition device 151A transmits EventStr6 to the action execution unit 140 as well when "select text box" is uttered. As a result, the text box can be selected not only by operating the touch panel but by the operation using voice recognition.

```
        EventStr6 =
        {"Event":"mme:Select","Target": "sys:UIEditData","Value": "ui:TextBoxl "}
```

Here, as illustrated in Fig. 6, "sys: UIEditData" represents a design information storage 131.

Moreover, the design information in which the action execution unit 140 is specified to perform the following action is generated in (2) coordinated action design listed in Fig. 2.

The action execution unit 140 transmits EventStr7 to the design tool group 120 upon receiving EventStr6.

```
        EventStr7 =
        {"Event":"mme:Show","Target":"sys: UIEditData","Value":"ui:TextBox1"}
```

Upon receiving EventStr7, the input/output information abstraction unit 125 corresponding to the UML design tool 121B acquires common design information about the text box from the design information storage 131. The input/output information abstraction unit 125 then converts the common design information into the design information in a format corresponding to the UML design tool 121B and causes the GUI device 151E to display the information.

As described above, the operations of the plurality of devices 151 can be made to correspond to a certain action of the design tool 121.

In the first example, the GUI device 151E and the voice recognition device 151A are both adapted to transmit EventStr6. The action execution unit 140 may thus transmit EventStr7 when simply receiving EventStr6 without being aware of where EventStr6 is transmitted from or the like.

The event transmitted/received between the action execution unit 140 and the device 151 uses the common format as described above, so that the implementation of the action execution unit 140 can be simplified to be able to increase development efficiency.

(Second example: design tool 121 operated by a plurality of devices 151)

In the second example, an operation on the GUI device 151E (touch panel) and an operation on the voice recognition device 151A together operate the design tool 121.

The GUI screen 220 includes the text box as illustrated in Fig. 26. In this case, a search target (the text box in this example) is identified by an operation on the GUI device 151E, and execution detail (display of the design information in this example) is instructed by an operation on the voice recognition device 151A.

Note that in this case, the UML design tool 121B is preselected as the design tool 121.

In this case, for example, definition information specifying to perform the following input/output action is generated as an input/output definition of the GUI device 151E and the voice recognition device 151A in (1) input/output design.

The GUI device 151E transmits EventStrA to the action execution unit 140 when the text box is touched.

```
        EventStrA =
        {"sys:Event":"mme:Select","sys:Target":"ui:UIEditData","sys:Value":"ui:TextBox1"}
```

The voice recognition device 151A transmits EventStrB to the action execution unit 140 when "display design information" is uttered.

```
        EventStrB = {"sys: Event": "mme: Show", "sys: Target": "ui: UIEditData",
        "sys: Value": ""}
```

Moreover, the design information in which the action execution unit 140 is specified to perform the following action is generated in (2) coordinated action design listed in Fig. 2.

After receiving EventStrA, the action execution unit 140 waits for additional common output information to be received. Upon receiving EventStrB following EventStrA, the action execution unit 140 integrates EventStrA and EventStrB together and transmits EventStr7 to the design tool group 120.

Upon receiving EventStr7, the input/output information abstraction unit 125 corresponding to the UML design tool 121B acquires common design information about the text box from the design information storage 131. The input/output information abstraction unit 125 then converts the common design information into the design information in a format corresponding to the UML design tool 121B and causes the GUI device 151E to display the information.

As described above, the operations of the plurality of devices 151 can be integrated to output the instruction to the design tool 121.

The operation on the GUI device 151E and the operation on the voice recognition device 151A are integrated in the second example. Here, the event transmitted/received between the action execution unit 140 and the device 151 uses the common format. As a result, the operation on the GUI device 151E and the operation on the voice recognition device 151A can be integrated with an operation on another device 151 such as a space gesture recognition camera 151C or a keyboard 151D adapted to transmit EventStrA and EventStrB in response to the operation on the device.

Note that "sys: Value" of EventStrB is a blank string in this example. However, a search string may also be set to "sys: Value" to specify the design information to be displayed.

### (Third example: operation with natural language)

In a third example, the voice recognition device 151A analyzes a natural language being uttered and performs proper processing.

It is assumed that "search for a device that sets a value to the text box" is uttered. In this case, the voice recognition device 151A analyzes uttered information and transmits a proper event to the action execution unit 140. The proper processing according to the uttered information is performed as a result.

In this case, for example, definition information specifying to perform the following input/output action is generated as an input/output definition of the voice recognition device 151A in (1) input/output design.

The voice recognition device 151A breaks a recognized sentence into words by a morphological analysis. The voice recognition device 151A then uses each word as a keyword to search a semantics column in the table stored in the dictionary unit 110 and identify vocabulary corresponding to each word. Note that among the words acquired by breaking the sentence into words, a predetermined stop word need not be used as a keyword.

Here, "ui: TextBox1" is identified for "text box", "ev: SetValue" is identified for "set value", "mme: Search" is identified for "search", and "ui: UIDevice" is identified for "UI device".

The voice recognition device 151A generates an event on the basis of the identified vocabulary. The voice recognition device 151A for example breaks the identified vocabulary into a predicate and an object, and generates an event corresponding to the identified vocabulary while considering a prefix of the vocabulary. It is assumed in this case that EventStr8 is generated.

```
        EventStr8 =
        "Event":"mme:Search","Target":"sys:UIEditData","Value":{"Type":"ui:UIDevice","Ev
        ent":"ev:SetValue","Object":"ui:TextBox1"}}
```

The voice recognition device 151A transmits EventStr8 being generated to the action execution unit 140. The action execution unit 140 transmits an event corresponding to the received event to the design tool group 120. Here, the action execution unit 140 transmits EventStr8 as is to the design tool group 120.

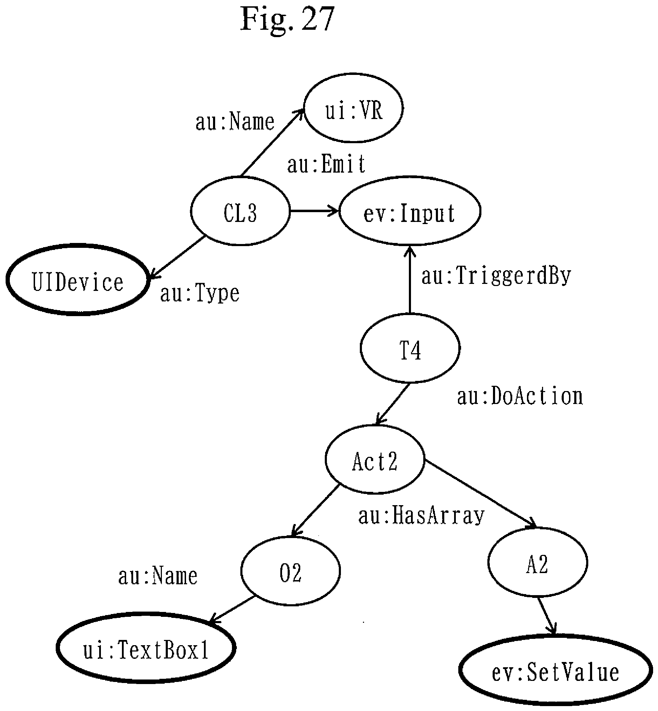

Upon receiving EventStr8, the input/output information abstraction unit 125 corresponding to the specified design tool 121 searches for "ui: UIDevice" related to "ev: SetValue" and "ui: TextBox1" from the common design information stored in the design information storage 131. Here, the common design information has a directed graph data structure as illustrated in Fig. 27. Accordingly, "ui: VR (voice recognition device 151A) can be identified by tracing the directed graph having "ev: SetValue" and "ui: TextBox1" at the end. The input/output information abstraction unit 125 causes the GUI device 151E to display information indicating that the voice recognition device 151A is identified.

As described above, the design tool 121 can be operated with the natural language by using the dictionary unit 110. In particular, the event transmitted/received between the action execution unit 140 and the device 151 as well as the event transmitted/received between the action execution unit 140 and the design tool 121 are described by using the vocabulary stored in the dictionary unit 110, whereby the natural language can be easily converted into the event.

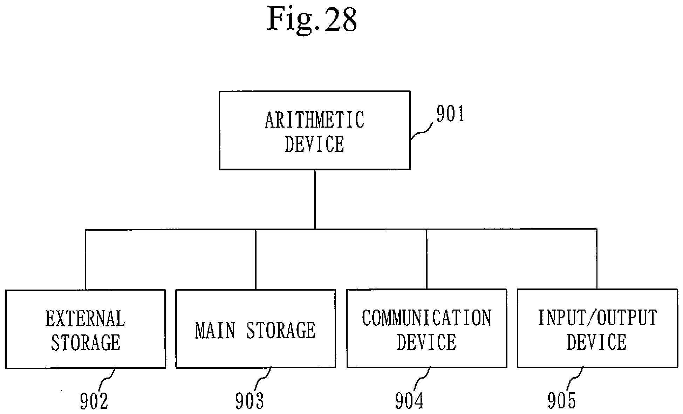

Fig. 28 is a diagram illustrating an example of a hardware configuration of the action design apparatus 100 according to the first and second embodiments.

The action design apparatus 100 is a computer. Each element in the action design apparatus 100 can be implemented by a program.

The action design apparatus 100 has the hardware configuration in which an arithmetic device 901, an external storage 902, a main storage 903, a communication device 904 and an input/output device 905 are connected to a bus.

The arithmetic device 901 is a CPU (Central Processing Unit) or the like executing a program. The external storage 902 is a ROM (Read Only Memory), a flash memory and a hard disk device, for example. The main storage 903 is a RAM (Random Access Memory), for example. The communication device 904 is a communication board, for example. The input/output device 905 is a mouse, a keyboard and a display, for example.

The program is usually stored in the external storage 902 and sequentially read into the arithmetic device 901 to be executed while being loaded to the main storage 903.

The program is a program implementing a function described as the design tool 121, the design information abstraction unit 122, the action pattern extraction unit 123, the action simulation unit 124, the action definition generation unit 130, the action execution unit 140, the input/output information abstraction unit 152 and the input/output defining unit 160.

Moreover, the external storage 902 stores an operating system (OS) where at least a part of the OS is loaded to the main storage 903, and the arithmetic device 901 executes the program while running the OS.

Furthermore, the information or the like that is described, in the first embodiment, to be stored in the dictionary unit 110, the design information storage 131 and the action definition storage 141 is stored as a file in the main storage 903.

Note that the configuration in Fig. 28 merely illustrates an example of the hardware configuration of the action design apparatus 100, where the action design apparatus 100 need not necessarily have the hardware configuration illustrated in Fig. 28 but may have another configuration.

### Reference Signs List

100: action design apparatus, 110: dictionary unit, 120: design tool group, 121: design tool, 122: design information abstraction unit, 123: action pattern extraction unit, 124: action simulation unit, 125: input/output information abstraction unit, 130: action definition generation unit, 131: design information storage, 140: action execution unit, 141: action definition storage, 150: device group, 151: device, 152: input/output information abstraction unit, and 160: input/output defining unit

## Claims

1. An action design apparatus comprising:
a plurality of design units (121) to generate design information in which a coordinated action among a plurality of devices (151) is specified according to a user operation, each of the plurality of design units generating the design information in a different format;
a design information conversion unit (122) provided corresponding to each of the plurality of design units to convert the design information generated by the corresponding design unit into common design information described by using vocabulary stored in a dictionary unit (110) as well as convert common design information generated from the design information generated by another design unit into design information in a format generated by the corresponding design unit;
an output information conversion unit (152) to convert output information output according to an action of each of the plurality of devices, into common output information described according to a common format provided for communication by using the vocabulary stored in the dictionary unit (110);
an action definition generation unit (130) to generate action definition information that specifies an action timing and action details of the plurality of devices (151) in the coordinated action based on the common design information; and
an action execution unit (140) to act each device in a coordinated manner according to the common design information converted by the design information conversion unit as well as act each design unit according to the action definition information generated by the action definition generation unit and the common output information converted by the output information conversion unit.

2. The action design apparatus according to claim 1, wherein
the action execution unit acts the device by transmitting, to the each device, instruction information described by using the vocabulary according to the common design information converted by the design information conversion unit.

3. The action design apparatus according to claim 1 or 2, wherein
the action execution unit acts the each device according to the common design information and the common output information.

4. The action design apparatus according to claim 3, wherein
the action execution unit acts one of the plurality of devices according to the common output information generated by converting output information that is output from another device.

5. The action design apparatus according to any of claims 1 to 4, further comprising
an action simulation unit (124) to simulate output of at least some of the plurality of devices when a coordinated action among the plurality of devices is tested.

6. The action design apparatus according to any of claims 1 to 5, further comprising
an action pattern extraction unit (123) to extract an action pattern specified by the design information from the common design information when the coordinated action among the plurality of devices is tested.

7. An action design program that causes a computer to execute:
a plurality of design processes to generate design information in which a coordinated action among a plurality of devices is specified according to a user operation, each of the plurality of design processes generating the design information in a different format;
a design information conversion process provided corresponding to each of the plurality of design processes to convert the design information generated in the corresponding design process into common design information described by using vocabulary stored in a dictionary unit as well as convert common design information generated from the design information generated in another design process into design information in a format generated in the corresponding design process;
an output information conversion process to convert output information output according to an action of each of the plurality of devices, into common output information described according to a common format provided for communication by using the vocabulary stored in the dictionary unit;
an action definition generation process to generate action definition information that specifies an action timing and action details of the plurality of devices in the coordinated action based on the common design information; and
an action execution process to act each device in a coordinated manner according to the common design information converted in the design information conversion process as well as act each design process according to the action definition information generated by the action definition generation unit and the common output information converted by the output information conversion process.

## Patentansprüche

1. Aktion-Entwurfsvorrichtung, umfassend:
eine Vielzahl von Entwurfseinheiten (121), um Entwurfsinformationen, in denen eine koordinierte Aktion unter einer Vielzahl von Einrichtungen (151) gemäß einer Benutzeroperation spezifiziert ist, zu generieren, wobei jede der Vielzahl von Entwurfseinheiten die Entwurfsinformationen in einem unterschiedlichen Format generiert;
eine Entwurfsinformationen-Konvertierungseinheit (122), die entsprechend jeder der Vielzahl von Entwurfseinheiten vorgesehen ist, um die durch die entsprechende Entwurfseinheit generierten Entwurfsinformationen in gemeinsame Entwurfsinformationen, die unter Verwendung von in einer Wörterbucheinheit (110) gespeichertem Vokabular beschrieben sind, zu konvertieren, sowie um gemeinsame Entwurfsinformationen, die aus den durch eine andere Entwurfseinheit generierten Entwurfsinformationen generiert sind, in Entwurfsinformationen in ein durch die entsprechende Entwurfseinheit generiertes Format zu konvertieren;
eine Ausgabeinformationen-Konvertierungseinheit (152), um Ausgabeinformationen, die gemäß einer Aktion von jeder der Vielzahl von Einrichtungen ausgegeben sind, in gemeinsame Ausgabeinformationen, die gemäß einem gemeinsamen Format beschrieben sind, das für Kommunikation unter Verwendung des in der Wörterbucheinheit (110) gespeicherten Vokabulars bereitgestellt ist, zu konvertieren;
eine Aktionsdefinition-Generierungseinheit (130), um Aktionsdefinitionsinformationen, die einen Aktion-Zeitpunkt und Aktion-Details der Vielzahl von Einrichtungen (151) in der koordinierten Aktion basierend auf den gemeinsamen Entwurfsinformationen spezifizieren, zu generieren; und
eine Aktion-Ausführungseinheit (140), um jede Einrichtung in einer koordinierten Weise gemäß der gemeinsamen Entwurfsinformationen, die durch die Entwurfsinformationen-Konvertierungseinheit konvertiert sind, zu betreiben, sowie jede Entwurfseinheit gemäß der Aktionsdefinitionsinformationen, die durch die Aktionsdefinition-Generierungseinheit generiert sind, und der gemeinsamen Ausgabeinformationen, die durch die Ausgabeinformationen-Konvertierungseinheit konvertiert sind, zu betreiben.

2. Aktion-Entwurfsvorrichtung nach Anspruch 1, wobei
die Aktion-Ausführungseinheit die Einrichtung betreibt durch Übertragen, an jede Einrichtung, von Anweisungsinformationen, die unter Verwendung des Vokabulars gemäß den durch die Entwurfsinformationen-Konvertierungseinheit konvertierten gemeinsamen Entwurfsinformationen beschrieben sind.

3. Aktion-Entwurfsvorrichtung nach Anspruch 1 oder 2, wobei
die Aktion-Ausführungseinheit die jeweilige Einrichtung gemäß den gemeinsamen Entwurfsinformationen und den gemeinsamen Ausgabeinformationen betreibt.

4. Aktion-Entwurfsvorrichtung nach Anspruch 3, wobei
die Aktion-Ausführungseinheit eines von der Vielzahl von Einrichtungen gemäß den gemeinsamen Ausgabeinformationen betreibt durch Konvertieren von Ausgabeinformationen, die von einer anderen Einrichtung ausgegeben sind.

5. Aktion-Entwurfsvorrichtung nach einem der Ansprüche 1 bis 4, ferner umfassend:
eine Aktion-Simulationseinheit (124), um Ausgabe von zumindest einigen von der Vielzahl von Einrichtungen zu simulieren, wenn eine koordinierte Aktion zwischen der Vielzahl von Einrichtungen getestet wird.

6. Aktion-Entwurfsvorrichtung nach einem der Ansprüche 1 bis 5, ferner umfassend:
eine Aktionsmuster-Extrahierungseinheit (123), um ein durch die Entwurfsinformationen spezifiziertes Aktionsmuster aus den gemeinsamen Entwurfsinformationen zu extrahieren, wenn die koordinierte Aktion unter der Vielzahl von Einrichtungen getestet wird.

7. Aktion-Entwurfsprogramm, das einen Computer veranlasst, auszuführen:
eine Vielzahl von Entwurfsprozessen, um Entwurfsinformationen, in denen eine koordinierte Aktion unter einer Vielzahl von Einrichtungen gemäß einer Benutzeroperation spezifiziert ist, zu generieren, wobei jeder der Vielzahl von Entwurfsprozessen die Entwurfsinformationen in einem unterschiedlichen Format generiert;
einen Entwurfsinformationen-Konvertierungsprozess, der entsprechend jedem der Vielzahl von Entwurfsprozessen vorgesehen ist, um die in dem entsprechenden Entwurfsprozess generierten Entwurfsinformationen in gemeinsame Entwurfsinformationen, die unter Verwendung von in einer Wörterbucheinheit gespeichertem Vokabular beschrieben sind, zu konvertieren, sowie gemeinsame Entwurfsinformationen, die aus den in einem anderen Entwurfsprozess generierten Entwurfsinformationen generiert sind, in Entwurfsinformationen in einem in dem entsprechenden Entwurfsprozess generierten Format zu konvertieren;
einen Ausgabeinformationen-Konvertierungsprozess, um Ausgabeinformationen, die gemäß einer Aktion von jeder der Vielzahl von Einrichtungen ausgegeben werden, in gemeinsame Ausgabeinformationen, die gemäß einem gemeinsamen Format beschrieben sind, das für Kommunikation unter Verwendung des in der Wörterbucheinheit gespeicherten Vokabulars bereitgestellt ist, zu konvertieren;
einen Aktionsdefinition-Generierungsprozess, um Aktionsdefinitionsinformationen, die einen Aktion-Zeitpunkt und Aktion-Details der Vielzahl von Einrichtungen in der koordinierten Aktion basierend auf den gemeinsamen Entwurfsinformationen spezifizieren, zu generieren; und
einen Aktion-Ausführungsprozess, um jede Einrichtung in einer koordinierten Weise gemäß der gemeinsamen Entwurfsinformationen, die in dem Entwurfsinformationen-Konvertierungsprozess konvertiert wurden, zu betreiben, sowie jeden Entwurfsprozess gemäß der durch die Aktionsdefinition-Generierungseinheit generierten Aktionsdefinitionsinformationen und der durch den Ausgabeinformationen-Konvertierungsprozess konvertierten gemeinsamen Ausgabeinformationen zu betreiben.

## Revendications

1. Appareil de conception d'action comprenant :
une pluralité d'unités de conception (121), destinées à générer des informations de conception dans lesquelles une action coordonnée parmi une pluralité de dispositifs (151), est spécifiée selon une opération d'utilisateur, chacune de la pluralité d'unités de conception générant les informations de conception dans un format différent ;
une unité de conversion d'informations de conception (122) fournie de manière correspondante à chacune de la pluralité d'unités de conception afin de convertir les informations de conception générées par l'unité de conception correspondante en informations de conception communes décrites en utilisant un vocabulaire stocké dans une unité dictionnaire (110), et de convertir également les informations de conception communes générées à partir des informations de conception générées par une autre unité de conception, en informations de conception dans un format généré par l'unité de conception correspondante ;
une unité de conversion d'informations de sortie (152), destinée à convertir des informations de sortie délivrées en sortie selon une action de chacun de la pluralité de dispositifs, en informations de sortie communes décrites selon un format commun fourni pour une communication en utilisant le vocabulaire stocké dans l'unité dictionnaire (110) ;
une unité de génération de définition d'action (130), destinée à générer des informations de définition d'action qui spécifient une synchronisation d'action et des détails d'action de la pluralité de dispositifs (151) dans l'action coordonnée sur la base des informations de conception communes ; et
une unité d'exécution d'action (140), destinée à faire agir chaque dispositif d'une façon coordonnée selon les informations de conception communes converties par l'unité de conversion d'informations de conception, à faire agir également chaque unité de conception selon les informations de définition d'action générées par l'unité de génération de définition d'action, et les informations de sortie communes converties par l'unité de conversion d'informations de sortie.

2. Appareil de conception d'action selon la revendication 1, dans lequel
l'unité d'exécution d'action fait agir le dispositif en transmettant, à chaque dispositif, des informations d'instruction décrites en utilisant le vocabulaire selon les informations de conception communes converties par l'unité de conversion d'informations de conception.

3. Appareil de conception d'action selon la revendication 1 ou 2, dans lequel
l'unité d'exécution d'action fait agir chaque dispositif selon les informations de conception communes et les informations de sortie communes.

4. Appareil de conception d'action selon la revendication 3, dans lequel
l'unité d'exécution d'action fait agir l'un de la pluralité de dispositifs selon les informations de sortie communes générées en convertissant les informations de sortie qui sont délivrées en sortie par un autre dispositif.

5. Appareil de conception d'action selon l'une quelconque des revendications 1 à 4, comprenant en outre :
une unité de simulation d'action (124), destinée à simuler une sortie de certains au moins de la pluralité de dispositifs, quand une action coordonnée parmi la pluralité de dispositifs, est testée.

6. Appareil de conception d'action selon l'une quelconque des revendications 1 à 5, comprenant en outre :
une unité d'extraction de modèle d'action (123), destinée à extraire un modèle d'action spécifié par les informations de conception, à partir des informations de conception communes quand est testée l'action coordonnée parmi la pluralité de dispositifs.

7. Programme de conception d'action, destiné à faire exécuter par un ordinateur :
une pluralité de processus de conception, destinés à générer des informations de conception dans lesquelles une action coordonnée parmi une pluralité de dispositifs, est spécifiée selon une opération d'utilisateur, chacun de la pluralité de processus de conception générant les informations de conception dans un format différent ;
un processus de conversion d'informations de conception fourni de manière correspondante à chacun de la pluralité de processus de conception afin de convertir les informations de conception générées dans le processus de conception correspondant en informations de conception communes décrites en utilisant un vocabulaire stocké dans une unité dictionnaire, et de convertir également les informations de conception communes générées à partir des informations de conception générées dans un autre processus de conception, en informations de conception dans un format généré dans le processus de conception correspondant ;
un processus de conversion d'informations de sortie, destiné à convertir des informations de sortie délivrées en sortie selon une action de chacun de la pluralité de dispositifs, en informations de sortie communes décrites selon un format commun fourni pour une communication en utilisant le vocabulaire stocké dans l'unité dictionnaire ;
un processus de génération de définition d'action, destiné à générer des informations de définition d'action qui spécifient une synchronisation d'action et des détails d'action de la pluralité de dispositifs dans l'action coordonnée sur la base des informations de conception communes; et
un processus d'exécution d'action, destiné à faire agir chaque dispositif d'une façon coordonnée selon les informations de conception communes converties dans le processus de conversion d'informations de conception, à faire agir également chaque processus de conception selon les informations de définition d'action générées par l'unité de génération de définition d'action, et les informations de sortie communes converties par le processus de conversion d'informations de sortie.
